# EUROPEAN PATENT APPLICATION

(11) **EP 4 287 351 A1**
(43) Date of publication of application: **06.12.2023**
(21) Application number: 22745698.5
(22) Date of filing: 20.01.2022
(51) Int. Cl.: H01M 10/44, H01M 50/213, H01M 50/284, H01M 50/296, H01M 50/298, H01M 50/507, H01M 50/572

(54) **POWER SUPPLY DEVICE AND METHOD FOR PRODUCING SAME**

(30) Priority: 29.01.2021 JP 2021013122
(71) Applicant: Panasonic Energy Co., Ltd., Osaka 570-8511 (JP)
(72) Inventor: KAWAI, Naoki, Kadoma-shi, Osaka 571-0057 (JP); YAMASHITA, Takahiro, Kadoma-shi, Osaka 571-0057 (JP); ICHIZA, Tomoyuki, Kadoma-shi, Osaka 571-0057 (JP)
(74) Representative: Novagraaf International SA
(86) International application number: PCT/JP2022/001892
(87) International publication number: WO 2022/163477

(57) **Abstract**

Unintentional damage of a power supply device during assembling of the device is avoided to increase workability of the assembling. The power supply device includes secondary battery cells (1) each including an electrode terminal, a battery holder (10) holding the cells (1), and a circuit board including a control circuit mounted thereon and electrically connected to the cells (1) to control charging and discharging. A method of manufacturing the device includes connecting, to a board-side ground terminal disposed on the board, a battery-side ground terminal (30) drawn outside from the holder (10) as a ground of a total output of the cells (1) electrically connected in series and/or parallel, mounting the board on a surface of the holder (10), and connecting, to respective one or more board-side intermediate terminals disposed on the board, one or more battery-side intermediate terminals (21) disposed on the holder (10) being electrically connected to at least one of the cells (1).

## Description

### TECHNICAL FIELD

The present invention relates to a power supply device and a method of manufacturing the device.

### BACKGROUND ART

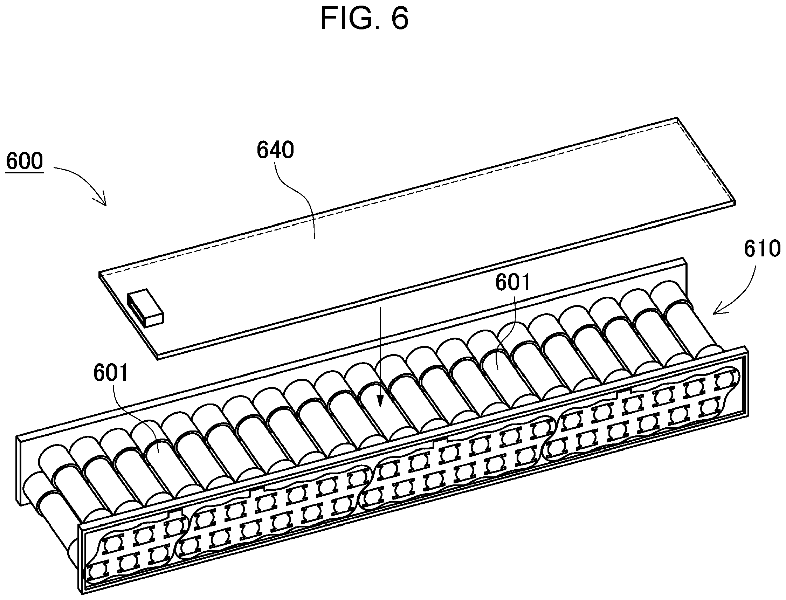

A power supply device including a lot of secondary battery cells connected in series and parallel to one another is used as a backup power supply for a server or as a power supply device in applications to stationary batteries for home appliances, business facilities, and plants. The applications further include power sources for driving vehicles, such as hybrid vehicles, electric vehicles, electric carts, and electric scooters, and further include electric power sources for driving power-assisted bicycles and electric power tools. Such a power supply device includes secondary battery cells connected in series to one another for supplying a higher power output. For example, power supply device 600 shown in an exploded perspective view of FIG. 6 includes battery holder 610 holding secondary battery cells 601, and circuit board 640 on which a control circuit is mounted to control the charging and discharging of secondary battery cells 601. IC chips such as an AFE are mounted on circuit board 640. Battery holder 610 are electrically connected to circuit board 640 via, e.g. lead plates.

While assembling such a power supply device, in the case that the ground of a circuit floats in an unstable state when the circuit board is connected to the battery holder with lead plates, an element such as an IC may be destructed due to application of a high voltage to the circuit, application of an overvoltage to an unintended circuit, or flow of a rush current through an unintended path. This may cause malfunction or circuit destruction. In the case, in particular, where plural locations are connected with, e.g. lead plates, the voltage applied to a circuit depends on which one of lead plates is connected first. For this reason, in the case of taking an inappropriate order of connection, a high voltage is temporally applied to a circuit, which possibly brings about a situation where elements are destructed. To avoid this, the connection may be started by connecting a lower potential side of the circuit to a lower potential side of the battery holder.

Circuit board 640 often has a flat plate shape as shown in FIG. 6, and has a structure that lead plates and patterns to be electrically connected are fixed on a surface of the board. Thus, when merely placing the circuit board on battery holder 610, this structure causes uncertainty as to which one of connection parts first contacts to conduct electricity. Therefore, even in trying to connect lower potential sides first, another connection part may unintentionally contact prior to the connection of the lower potential sides; such assembling has been a cumbersome task.

### Citation List

### Patent Literature

PTL 1: Japanese Patent Laid-Open Publication No. 2011-243426

### SUMMARY OF INVENTION

### Technical Problem

One of purposes of the present invention is to provide a power supply device that avoids unintended damage during its assembling and improves workability in the assembling, and a method of manufacturing the power supply device.

### Solution to Problem and Advantageous Effect of Invention

To achieve the above object, a method a first aspect of the present invention of manufacturing a power supply device that includes secondary battery cells each including an electrode terminal, a battery holder holding the secondary battery cells, and a circuit board including a control circuit mounted on the circuit board, the control circuit being electrically connected to the secondary battery cells and being configured to control charging and discharging. The method includes: connecting a battery-side ground terminal to a board-side ground terminal disposed on the circuit board, the battery-side ground terminal being drawn outside from the battery holder as a ground of a total output of the plurality of secondary battery cells electrically connected in series and/or parallel to one another; and connecting one or more battery-side intermediate terminals disposed on a surface of the battery holder to respective one or more board-side intermediate terminals disposed on the circuit board after mounting the circuit board on a surface of the battery holder, the one or more battery-side intermediate terminals being electrically connected to at least one of the plurality of secondary battery cells. When assembling the power supply device, this configuration allows the battery-side ground terminal drawn outside from the battery holder to be first connected to the board-side ground terminal, resulting in avoidance of damage that would otherwise be caused if the battery-side intermediate terminals and the board-side intermediate terminals are first electrically conducted. This enhances reliability in the assembling.

In a method of manufacturing a power supply device according to a second aspect of the present invention, in the method described above, the connecting the battery-side ground terminal to the board-side ground terminal includes connecting, to the board-side ground terminal, the battery-side ground terminal drawn outside from the battery holder via a flexible member. This configuration improves handling of the battery-side ground terminal drawn outside, which provides an advantage of rapidly carrying out the connection prior to the work of connecting other connection terminals.

A power supply device according to a third aspect of the present invention includes secondary battery cells each including an electrode terminal; a battery holder holding the plurality of secondary battery cells; and a circuit board mounted on a surface of the battery holder. the battery holder includes: one or more battery-side intermediate terminals electrically connected to at least one of the plurality of secondary battery cells; and a battery-side ground terminal drawn outside from the battery holder as a ground of a total output of the plurality of secondary battery cells electrically connected in series and/or parallel to one another. The circuit board includes: one or more board-side intermediate terminals electrically connected to the one or more battery-side intermediate terminals; and a board-side ground terminal connected to the battery-side ground terminal. When assembling the power supply device, this configuration allows the battery-side ground terminal drawn outside from the battery holder to be first connected to the board-side ground terminal, resulting in avoidance of damage that would otherwise be caused if the battery-side intermediate terminals and the board-side intermediate terminals were first electrically conducted. This configuration enhances reliability during the assembling.

In a power supply device according to a fourth aspect of the present invention, in the configuration described above, the battery-side ground terminal is drawn outside from the battery holder via a flexible member. This configuration described above improves handling of the battery-side ground terminal having been drawn outside, which provides an advantage of rapidly carrying out the connection prior to the work of connecting other connection terminals.

In a power supply device according to a fifth aspect of the present invention, in any one of the configurations described above, the one or more board-side intermediate terminals include one or more lug terminals disposed at one or more locations on a side of the circuit board facing the battery holder, each of the one or more locations corresponding to a corresponding one of the one or more battery-side intermediate terminals. The one or more lug terminals are connected to the one or more battery-side intermediate terminals due to a structure that the circuit board is mounted on a surface of the battery holder. In the configuration described above, the mounting of the circuit board connects the lug terminals to the battery-side intermediate terminals. In particular, the battery-side ground terminal is connected to the board-side ground terminal prior to the mounting of the circuit board. This therefore avoids random connection between the lug terminals and the battery-side intermediate terminals.

In a power supply device according to a sixth aspect of the present invention, in any one of the configurations described above, the battery holder includes a plurality of lead plates each electrically connecting electrode terminals of adjacent secondary battery cells out of the plurality of secondary battery cells to each other. A lead plate among the plurality of lead plates is a ground lead plate functioning as a ground of a total output of the plurality of secondary battery cells electrically connected in series and/or parallel to one another. The battery-side ground terminal is connected to the ground lead plate.

In a power supply device according to a seventh aspect of the present invention, in any one of the configurations described above, the flexible member is a lead wire. The lead wire has one end previously connected to the battery-side ground terminal and another end functioning as a free end connectable to the ground lead plate.

In a power supply device according to an eighth aspect of the present invention, in any one of the configurations described above, the battery-side ground terminal includes a battery-side connector disposed at the another end of the lead wire connected to the board-side ground terminal. The board-side ground terminal includes a board-side connector connected to the battery-side connector.

In a power supply device according to a ninth aspect of the present invention, in any one of the configurations described above, the battery holder includes lead plates. Each of the lead plates electrically connecting a corresponding pair of electrode terminals of adjacent secondary battery cells out of the secondary battery cells to each other. The one or more battery-side intermediate terminals are disposed at respective portions of the lead plates.

In a power supply device according to a tenth aspect of the present invention, in any one of the configurations described above, the circuit board has a rectangular shape. The board-side ground terminal is disposed at an edge of the rectangular shape. This configuration described above allows the battery-side ground terminal to be easily connected to the board-side ground terminal disposed at the edge of the circuit board.

A power supply device according to an eleventh aspect of the present invention includes secondary battery cells each including an electrode terminal, a battery holder holding the secondary battery cells, and a circuit board mounted on a surface of the battery holder. The battery holder includes: one or more battery-side intermediate terminals electrically connected to at least one of the secondary battery cells; and a battery-side ground terminal functioning as a ground of a total output of the secondary battery cells electrically connected in series and/or parallel to one another. The circuit board includes: one or more board-side intermediate terminals electrically connected to the one or more battery-side intermediate terminals; and a board-side ground terminal drawn outside from the circuit board, the board-side ground terminal being connected to the battery-side ground terminal. When assembling the power supply device, this configuration allows the board-side ground terminal drawn outside from the circuit board to be first connected to the battery-side ground terminal, resulting in avoidance of damage that would otherwise be caused if the battery-side intermediate terminals are first electrically conducted with the board-side intermediate terminals. This enhances reliability in the assembling.

In a power supply device according to a twelfth aspect of the present invention, in any one of the configurations described above, the battery-side ground terminal includes a battery-side connector. The board-side ground terminal includes a board-side connector engaged with the battery-side connector. In this configuration, the engaging the battery-side connector of the battery-side ground terminal with the board-side connector of the board-side ground terminal allows the board-side ground to be electrically connected to the battery-side ground easily and reliably, which stabilizes voltages of the circuit board.

### BRIEF DESCRIPTION OF DRAWINGS

FIG. 1 is an exploded perspective view of a power supply device according to Exemplarily Embodiment 1 of the present invention.
FIG. 2 is an enlarged plan view of a principal part of the power supply device shown in FIG. 1.
FIG. 3 is an exploded perspective view of the power supply device of FIG. 1 when viewed from the back side.
FIG. 4 is a bottom view of a circuit board shown in FIG. 1.
FIG. 5 is an exploded perspective view of a power supply device according to Exemplarily Embodiment 2.
FIG. 6 is an exploded perspective view of a conventional power supply device.

### DESCRIPTION OF EMBODIMENT

Hereinafter exemplarily embodiments of the present invention will be described with reference to the accompanying drawings. However, the exemplary embodiments described below are examples for embodying the technical idea of the present invention, and the present invention is not limited to the following description. Moreover, this specification never limits the members described in the claims to the members of the exemplary embodiments. Unless otherwise specified, the dimensions, materials, shapes, relative positions, and the like of the configuration components described in the exemplary embodiments are not intended to limit the scope of the present invention but are merely illustrative examples. It should be noted that the sizes, positional relationship, and the like of members illustrated in the drawings may be exaggerated for clarity of explanation. Furthermore, in the following description, the same names and reference numerals indicate the same or similar members, and detailed description will be appropriately omitted. Furthermore, regarding elements that configure the present invention, a plurality of elements may be composed of the same member so that one member serves as a plurality of elements, or conversely, the function of one member can be shared and achieved by a plurality of members.

A power supply device according to the present invention is used in various applications that include backup power supplies for servers, power supplies mounted on electric-powered vehicles, such as a hybrid vehicle and an electric vehicle, for supplying electric power to vehicle's running motors, power supplies for storing electric power generated by such as photovoltaic power generation and wind power generation from natural energies, and power supplies for storing late-night electric power. Such a power supply device is used, in particular, as a power supply preferably used in high-power, large-current applications. Hereinafter, a power supply device to be used as a backup power supply for a server will be described as one exemplary embodiment of the present invention.

### Exemplary Embodiment 1

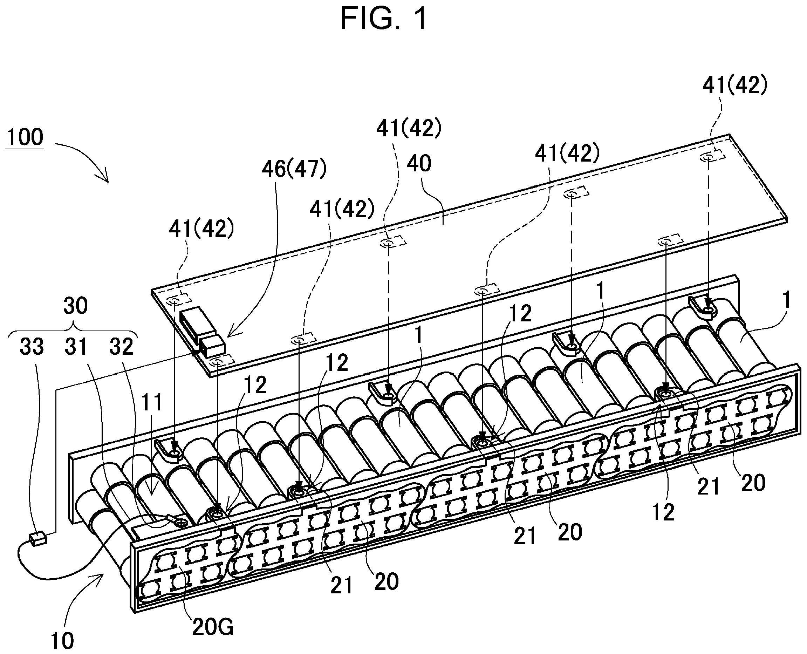

An exploded perspective view of FIG. 1 illustrates power supply device 100 according to Exemplarily Embodiment 1 of the present invention. Power supply device 100 illustrated in the figure includes battery holder 10 and circuit board 40 mounted on a surface of battery holder 10. Battery holder 10 holds secondary battery cells 1.

### Secondary Battery Cell 1

Each of secondary battery cells 1 is a cylindrical secondary battery cell including an outer case with a cylindrical shape. Cylindrical secondary battery cell 1 has electrode surfaces on both end surfaces thereof. Secondary battery cells 1 are connected at least in series to one another. Secondary battery cells 1 connected in series to one another are preferably further connected in parallel to other secondary battery cells 1 connected in series to one another. The output of a battery assembly group composed of secondary battery cells 1 that involve such series connection, is supplied from power supply device 100. Secondary battery cells 1 are cylindrical lithium-ion secondary batteries. However, the secondary battery cells of the power supply device according to the present invention are not limited to the cylindrical batteries and also to the lithium-ion secondary batteries. All types of rechargeable batteries such as a nickel-hydrogen battery cell are also applicable to the battery cells.

### Battery Holder 10

Battery holder 10 is a member for holding secondary battery cells 1. Battery holder 10 includes battery-holding parts each having a cylindrical shape into which cylindrical secondary battery cell 1 can be inserted. In battery holder 10 shown in FIG. 1, the cylindrical battery-holding parts are arranged in two tiers, the upper tier and the lower tier. The cylindrical axes of the battery-holding parts in the upper tier deviate from the cylindrical axes of the battery-holding parts in the lower tier, thereby reducing a total thickness of the battery holder. Battery holder 10 is made of material, such as polycarbonate ABC resin, with high insulation and heat resistance.

Battery holder 10 is divided into sub-holders sandwiching secondary battery cells 1 from both sides. The middle portions of secondary battery cells 1 are exposed from the sub-holders. Secondary battery cells 1 sandwiched by respective pairs of the sub-holders, and lead plates 20 are fixed on side surfaces of battery holder 10 and lead plates 20 are welded to secondary battery cells 1. In order to position lead plates 20 at predetermined locations, each side surfaces of battery holder 10 has guides therein for positioning the leads. The guides fit to the respective contours of lead plates 20.

Battery holder 10 includes lead plates 20 and battery-side ground terminal 30. Each of lead plates 20 includes battery-side intermediate terminal 21. Battery-side intermediate terminal 21 is electrically connected to at least one of secondary battery cells 1.

### Lead Plate 20

All lead plates 20 are disposed on the side surfaces of battery holder 10 and connected to the electrode surfaces of secondary battery cells 1. Lead plates 20 connect secondary battery cells 1 in series and parallel to one another. In particular, in high-capacity secondary battery cells 1 such as lithium-ion secondary batteries, for the purpose of detecting the state of each secondary battery cell 1, the potential of each of lead plates 20 is detected, which allows the voltage of an assembly group of secondary battery cells 1 connected in parallel to lead plate 20 in question to be detected. In this example, the battery assembly group is composed of a total of 42 secondary battery cells 1 in which the 42 cells of secondary battery cells 1 are connected in parallel every 6 secondary battery cells 1, which makes a set, into 7 sets, and the 7 sets are connected in series.

Lead plates 20 electrically and mutually connects electrode terminals of adjacent secondary battery cells 1. A lead plate out of lead plates 20 which serves as the ground of the total output of secondary battery cells 1 electrically connected in series and/or parallel to one another is referred to as ground lead plate 20G. Battery-side ground terminal 30 is connected to ground lead plate 20G.

Battery-side ground terminal 30 is connected to the ground side of the total output of secondary battery cells 1 electrically connected in series and/or parallel to one another. Battery-side ground terminal 30 is drawn outside from battery holder 10.

The upper surface of battery holder 10 is used as mounting surface 11 on which circuit board 40 is mounted. A frame body for holding the circuit board may be disposed on the board-mounting surface. Alternatively, a board holder for holding the circuit board may be disposed separately.

### Circuit Board 40

Circuit board 40 is mounted on mounting surface 11. Circuits, such as a voltage-detecting circuit to detect potentials of intermediate portions of the battery assembly group in which secondary battery cells 1 are connected in series and parallel, a control circuit to control charging and discharging, and a safety circuit are mounted on circuit board 40. The intermediate potentials of secondary battery cells 1 which is connected in series to constitute the battery assembly group are detected from the voltages of the potential lead plates 20 and are supplied to the voltage-detecting circuit.

Circuit board 40 has a rectangular shape. Circuit board 40 includes board-side intermediate terminals 41 and board-side ground terminal 46. Board-side intermediate terminals 41 are connected to one or more battery-side intermediate terminals 21. Board-side ground terminal 46 is connected to battery-side ground terminal 30. When assembling power supply device 100, this configuration allows battery-side ground terminal 30 having been drawn outside from battery holder 10 to be first connected to board-side ground terminal 46, resultantly avoiding damage that would otherwise be caused if battery-side intermediate terminals 21 are first electrically conducted with board-side intermediate terminals 41. This enhances reliability in the assembling.

In assembling the power supply device, the circuit board is electrically connected to the battery holder. In the assembling, the circuit-board side ground which floats in an unstable state is electrically connected to the terminal of the battery holder may cause the following possible troubles particularly in the case of the secondary battery cells having been connected in series and producing a high voltage. That is, an overvoltage may be applied to an unintended location, and allow a rush current to flow through an unintended path, consequently causing malfunction or destruction of the circuit. In the case that locations is connected with lead plates, the voltage applied to a circuit depends on which one of the lead plates is connected first. For this reason, in the case of taking an inappropriate order of connection, a high voltage is temporally applied to the circuit, which possibly brings a situation where its elements are destructed. To avoid this, such electrical connections between the circuit board and the battery holder are carried out sequentially in ascending order of voltage. Unfortunately, fixing the order of electrical connections of the lead plates forces the connection work in the assembling to be carried out in a certain order, resulting in poor work efficiency and taking time to connect all locations. In recent years, a method featuring random connection for connecting the connection terminals of an IC in which the order of connections is free, has been introduced and preferably used from the viewpoint of increasing the degree of freedom of the connection work. However, even with such an IC randomly connectable, the random connection guarantees nothing more than that any order of connections is allowed only for a single IC alone. Therefore, depending on the order of connections that involves a circuit with the IC mounted thereon, there has still been a risk that the element can be damaged due to the application of a transient high voltage and the inflow of an overcurrent.

In contrast, in power supply device 100 according to the present embodiment, the ground of circuit board 40 is easily and reliably connected first to the ground of battery holder 10 among others, which enhances stability. After that, the connection between circuit board 40 and battery holder 10 can be safely carried out.

Circuit board 40 may preferably include board-side ground terminal 46 on an edge side of the rectangular shape of the circuit board. Board-side ground terminal 46 thus disposed on the edge side of circuit board 40 provides easy connection of battery-side ground terminal 30 having been drawn out. In the example illustrated in FIG. 1, board-side ground terminal 46 is disposed at an edge in the longitudinal direction of circuit board 40 that extends in one direction.

### Battery-Side Ground Terminal 30

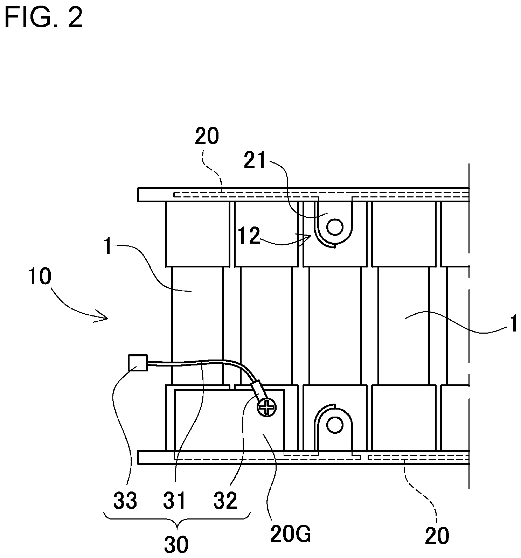

Battery-side ground terminal 30 is preferably drawn outside from battery holder 10 via a flexible member, as shown in FIG. 2. This configuration improves handling of battery-side ground terminal 30 having been drawn outside, which provides an advantage of rapidly carrying out its connection prior to the connection work for other connection terminals. The flexible member may be implemented by, e.g., lead wire 31. One end of lead wire 31 is previously connected to ground lead plate 20G. The other end of lead wire 31 is a free end connectable to ground lead plate 20G. This configuration facilitates connection, to board-side ground terminal 46, of battery-side ground terminal 30 which has been drawn out from battery holder 10 with flexible lead wire 31.

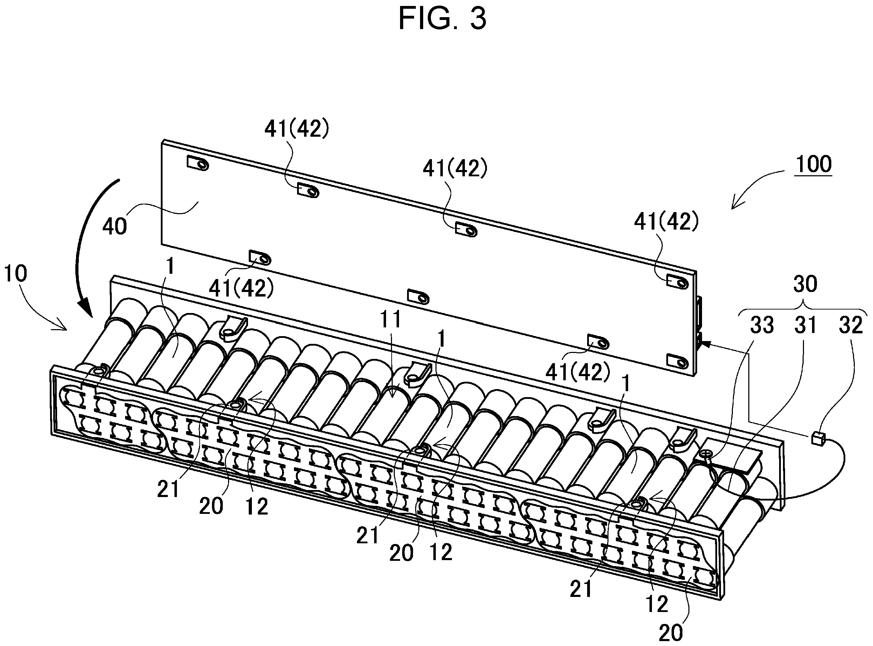

In the example shown in FIG. 2, one end of lead wire 31 has ring crimp terminal 32 and configured to be fixed by screwing to ground lead plate 20G. Here, the upper end of ground lead plate 20G is bent to have an L-shape and has a through-hole therein through which ring crimp terminal 32 is fixed to the upper end by screwing. The other end, i.e., the distal-end side of lead wire 31 includes battery-side connector 33. On the other hand, board-side ground terminal 46 includes board-side connector 47 to be engaged with battery-side connector 33. This configuration in which battery-side connector 33 of battery-side ground terminal 30 is snagged with board-side connector 47 of board-side ground terminal 46 allows the board-side ground to be electrically connected to the battery-side ground easily and reliably, thereby stabilizing voltages of circuit board 40. As illustrated in FIGS. 1 and 3, board-side connector 47 is disposed at a corner portion of circuit board 40, and brings about a state where battery-side connector 33 can be easily connected to board-side connector 47.

### Holder-Side Connector 12

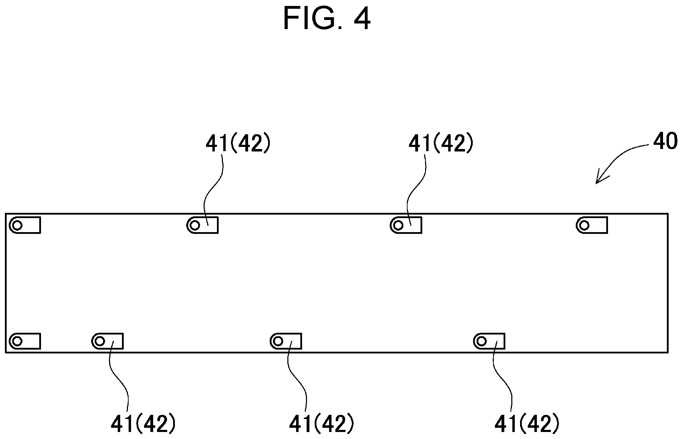

Battery holder 10 includes one or more holder-side connectors 12 on a side of battery holder 10 facing circuit board 40. One or more holder-side connectors 12 are connected to one or more battery-side intermediate terminals 21. Holder-side connectors 12 may be formed by bending battery-side intermediate terminals 21 disposed in lead plates 20. On the other hand, circuit board 40 includes lug terminals 42 mounted on a side of circuit board 40 facing battery holder 10 at locations corresponding to holder-side connectors 12 as shown in FIG. 4. This configuration of circuit board 40 thus mounted connects lug terminals 42 to holder-side connectors 12. That is, prior to mounting circuit board 40, as shown in FIG. 3, battery-side ground terminal 30 is connected previously to board-side ground terminal 46. This stabilizes voltages on the circuit board 40 to ensure safety, consequently allowing random connection between lug terminals 42 and holder-side connectors 12. In this state, as illustrated in FIG. 1 and other figures, circuit board 40 is positioned and mounted on mounting surface 11 of battery holder 10 so that lug terminals 42 are located corresponding to holder-side connectors 12, and allows the random connection in which these electrical connection portions can be connected in no particular order. That is, in a conventional device illustrated in FIG. 6, depending on which portion becomes first in contact to conduct electricity, there has been a risk of damage to electronic components mounted on a circuit board due to such as an unintended overvoltage applied thereon. In contrast, in power supply device 100 according to the present embodiment, even when secondary battery cells 1 connected in series are subjected to random connection almost simultaneously, it is possible to connect board-side ground terminals 46 of circuit board 40 first and reliably, thereby stabilizing the board. Thus, this configuration provides the connection work with high safety and an excellent yield and without any particular order of connections, resulting in realization of a highly flexible and efficient assembly work. In FIG. 3, circuit board 40 is illustrated as standing in an upright posture for easy view of its back side; however, it does not necessarily mean that circuit board 40 takes such an upright posture before placing it on mounting surface 11 of battery holder 10.

Mounting surface 11 of battery holder 10 and circuit board 40 may include a positioning mechanism for ease of connection between lug terminals 42 and holder-side connectors 12 while being positioned. For example, a projection may be disposed on mounting surface 11 so that the positioning is achieved by pressing an edge of circuit board 40 against the projection. Alternatively, a recess or hole may be formed in circuit board 40 while a locking piece to be inserted into the recess or hole may be formed in mounting surface 11. Alternatively, a fitting structure may be disposed at the junction portions between lug terminals 42 and holder-side connectors 12 so as to serve both the mechanical connection and the positioning function.

### Method of Manufacturing Power Supply Device 100

Power supply device 100 is assembled in the following procedure: First, battery-side ground terminal 30 having been drawn outside from battery holder 10 is connected to board-side ground terminal 46 disposed on circuit board 40. Next, circuit board 40 is mounted on mounting surface 11 of battery holder 10, and then, battery-side intermediate terminals 21 is connected to respective board-side intermediate terminals 41. In this way, when assembling power supply device 100, battery-side ground terminal 30 having been drawn outside from battery holder 10 is easily connected to board-side ground terminal 46 prior to connecting other portions. This stabilizes a ground of circuit board 40, thereby avoiding damage that would otherwise be caused by a preceding electrical conduction between battery-side intermediate terminals 21 and board-side intermediate terminals 41, and enhancing reliability in the assembling.

### Exemplary Embodiment 2

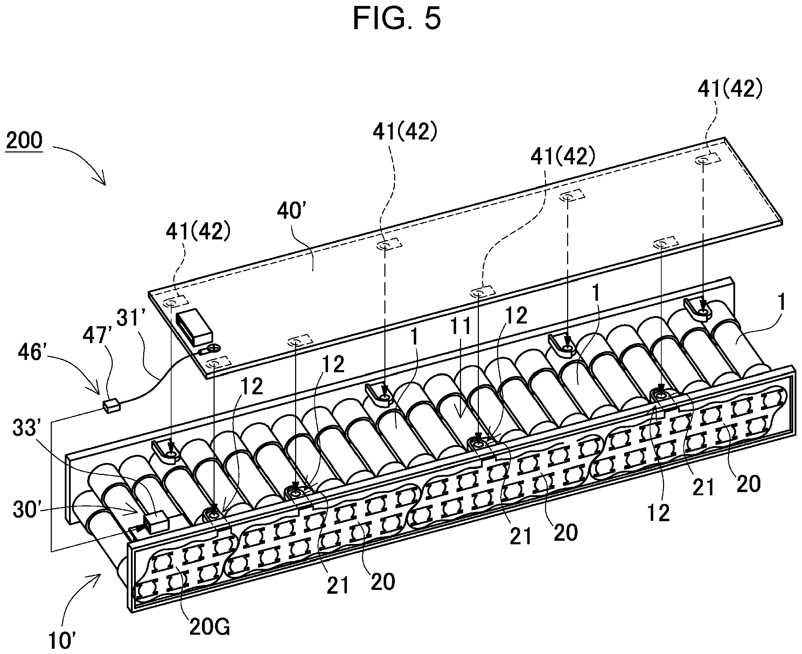

In the example described above, the description has been made regarding the configuration in which battery-side ground terminal 30 is drawn out from the battery holder 10 side and is connected to board-side ground terminal 46 of circuit board 40. However, the present invention is not limited to this configuration, and any configuration that facilitates the connection between the battery-side ground and the board-side ground can be used. For example, a board-side ground terminal may be drawn out from the circuit board side and connected to a battery-side ground terminal. Such a configuration is illustrated in FIG. 5 as a power supply device according to Exemplary Embodiment 2. In power supply device 200 illustrated in the figure, the same members as those of power supply device 100 according to Embodiment 1 described above are denoted by the same reference numerals and symbols, and their detailed explanations will be omitted. In power supply device 200 illustrated in FIG. 5, board-side ground terminal 46' is drawn out from the circuit board 40' side via lead wire 31'. Board-side ground terminal 46' includes board-side connector 47'. In addition, battery holder 10' includes battery-side ground terminal 30' at an edge of battery holder 10'. Battery-side ground terminal 30' serves as battery-side connector 33'. Battery-side connector 33' is engaged with board-side connector 47', which allows the battery-side ground to be equal to the board-side ground, allowing random connection carried out after that as in the case of Embodiment 1.

### INDUSTRIAL APPLICABILITY

A power supply device according to the present invention is preferably used as a backup power-supply device mountable in a power supply module of a computer server. In addition, it can appropriately be used in applications including backup power-supply devices of wireless base stations for mobile phones and the like, storage power supplies for use in households and plants, storage power devices combined with solar cells, e.g., power supplies for street lights, and backup power supplies for traffic lights. The applications also include power supplies for, such as, plug-in hybrid electric vehicles switchable between an EV-running mode and an HEV-running mode, hybrid electric vehicles, and electric vehicles.

### REFERENCE MARKS IN THE DRAWINGS

- 100, 200, 600: power supply device
- 1, 601: secondary battery cell
- 10, 10', 610: battery holder
- 11: mounting surface
- 12: holder-side connector
- 20: lead plate
- 20G: ground lead plate
- 21: battery-side intermediate terminal
- 30, 30': battery-side ground terminal
- 31, 31': lead wire
- 32: ring crimp terminal
- 33, 33': battery-side connector
- 40, 40', 640: circuit board
- 41: board-side intermediate terminal
- 42: lug terminal
- 46, 46': board-side ground terminal
- 47, 47': board-side connector

## Claims

1. A method of manufacturing a power supply device including a plurality of secondary battery cells each including an electrode terminal, a battery holder holding the plurality of secondary battery cells, and a circuit board including a control circuit mounted on the circuit board, the control circuit being electrically connected to the plurality of secondary battery cells and being configured to control charging and discharging of the plurality of secondary battery cells, the method comprising:
connecting a battery-side ground terminal to a board-side ground terminal disposed on the circuit board, the battery-side ground terminal being drawn outside from the battery holder as a ground of a total output of the plurality of secondary battery cells electrically connected in series and/or parallel to one another; and
connecting one or more battery-side intermediate terminals disposed on a surface of the battery holder to respective one or more board-side intermediate terminals disposed on the circuit board after mounting the circuit board on a surface of the battery holder, the one or more battery-side intermediate terminals being electrically connected to at least one of the plurality of secondary battery cells.

2. The method according to claim 1, wherein said connecting the battery-side ground terminal to the board-side ground terminal comprises connecting, to the board-side ground terminal, the battery-side ground terminal drawn outside from the battery holder via a flexible member.

3. A power supply device comprising:
a plurality of secondary battery cells each including an electrode terminal;
a battery holder holding the plurality of secondary battery cells; and
a circuit board mounted on a surface of the battery holder, wherein
the battery holder includes:
one or more battery-side intermediate terminals electrically connected to at least one of the plurality of secondary battery cells; and
a battery-side ground terminal drawn outside from the battery holder as a ground of a total output of the plurality of secondary battery cells electrically connected in series and/or parallel to one another, and
the circuit board includes:
one or more board-side intermediate terminals electrically connected to the one or more battery-side intermediate terminals; and
a board-side ground terminal connected to the battery-side ground terminal.

4. The power supply device according to claim 3, wherein the battery-side ground terminal is drawn outside from the battery holder via a flexible member.

5. The power supply device according to claim 4, wherein
the one or more board-side intermediate terminals include one or more lug terminals disposed at one or more locations on a side of the circuit board facing the battery holder, each of the one or more locations corresponding to a corresponding one of the one or more battery-side intermediate terminals, and
the one or more lug terminals are connected to the one or more battery-side intermediate terminals due to a structure in which the circuit board is mounted on a surface of the battery holder.

6. The power supply device according to claim 4 or 5, wherein
the battery holder includes a plurality of lead plates, each of the plurality of lead plates electrically connecting a corresponding pair of electrode terminals of adjacent secondary battery cells out of the plurality of secondary battery cells to each other,
a lead plate among the plurality of lead plates is a ground lead plate functioning as a ground of a total output of the plurality of secondary battery cells electrically connected in series and/or parallel to one another, and
a battery-side ground terminal is connected to the ground lead plate.

7. The power supply device according to claim 6, wherein
the flexible member is a lead wire, and
the lead wire has one end previously connected to the battery-side ground terminal, and another end functioning as a free end connectable to the ground lead plate.

8. The power supply device according to claim 7, wherein
the battery-side ground terminal includes a battery-side connector disposed at the another end of the lead wire connected to the board-side ground terminal, and
the board-side ground terminal includes a board-side connector connected to the battery-side connector.

9. The power supply device according to any one of claims 6 to 8, wherein
the battery holder includes a plurality of lead plates, each of the plurality of lead plates electrically connecting a corresponding pair of electrode terminals of adjacent secondary battery cells out of the plurality of secondary battery cells to each other, and
the one or more battery-side intermediate terminals are disposed at respective portions of the plurality of lead plates.

10. The power supply device according to any one of claims 1 to 9, wherein
the circuit board has a rectangular shape, and
the board-side ground terminal is disposed at an edge of the rectangular shape.

11. A power supply device comprising:
a plurality of secondary battery cells each including an electrode terminal;
a battery holder holding the plurality of secondary battery cells; and
a circuit board mounted on a surface of the battery holder, wherein
the battery holder includes:
one or more battery-side intermediate terminals electrically connected to at least one of the plurality of secondary battery cells; and
a battery-side ground terminal functioning as a ground of a total output of the plurality of secondary battery cells electrically connected in series and/or parallel to one another, and
the circuit board includes:
one or more board-side intermediate terminals electrically connected to the one or more battery-side intermediate terminals; and
a board-side ground terminal drawn outside from the circuit board, the board-side ground terminal being connected to the battery-side ground terminal.

12. The power supply device according to any one of claims 1 to 11, wherein
the battery-side ground terminal includes a battery-side connector, and
the board-side ground terminal includes a board-side connector engaged with the battery-side connector.
